# EUROPÄISCHE PATENTSCHRIFT

(11) **EP 0 981 015 B1**
(45) Veröffentlichungstag und Bekanntmachung des Hinweises auf die Patenterteilung: **19.05.2004**
(21) Anmeldenummer: 99810564.7
(22) Anmeldetag: 01.07.1999
(51) Int. Cl.: F22G 1/06

(54) **Dampferzeuger für überhitzten Dampf für Verbrennungsanlagen mit korrosiven Rauchgasen**
Superheated steam generator for combustion plants with corrosive gases
Générateur de vapeur surchauffée pour installations de combustion avec des gaz corrosifs

(30) Priorität: 20.08.1998 EP 98810816
(43) Veröffentlichungstag der Anmeldung: 23.02.2000
(73) Patentinhaber: MARTIN GmbH für Umwelt- und Energietechnik, 80807 München (DE)
(72) Erfinder: Rüegg, Hans, 5610 Wohlen (CH); Ziegler, Georg, 8404 Winterthur (CH)
(74) Vertreter: Zmyj, Erwin, Dipl.-Ing., Dipl.-Wirtsch.-Ing.

(56) Entgegenhaltungen:
- DE-C- 458 032
- DE-C- 496 575
- DE-C- 596 661
- DE-U- 9 107 273
- W. STIEFEL AND M. CARAVATTI: "Design and Engineering of the 300-MW Lignite Boiler Plants Sostanj 4 and Yuan Bao Shan" SULZER TECHNICAL REVIEW, Nr. 2, Februar 1978 (1978-02), Seiten 49-57, XP002091432 WINTERTHUR CH

## Beschreibung

### Technisches Gebiet

Die Erfindung bezieht sich auf das Gebiet der thermischen Behandlung von Müll, Sondermüll oder Klärschlamm. Sie betrifft einen Dampferzeuger für überhitzten Dampf für Verbrennungsanlagen mit korrosiven Rauchgasen, im wesentlichen bestehend aus einem Strahlungsteil mit mindestens einer Brennkammer und einem Konvektionsteil, mit mindestens einem Überhitzer und mit an mindestens einer Wand des Strahlungsteiles innen angeordneter Platten, wobei zwischen den Platten und der Wand des Strahlungsteiles ein Raum vorgesehen ist, und mindestens ein Teil des Überhitzers als Wandüberhitzer in diesem Raum angeordnet ist.

### Stand der Technik

Es ist bekannter Stand der Technik, für Müllverbrennungsanlagen Dampfkessel anzuwenden, wobei vorwiegend Naturumlaufkessel, aber auch Zwangumlaufoder Zwangdurchlaufkessel eingesetzt werden.

Zur Zeit werden als Kessel für Müllverbrennungsanlagen in mitteleuropäischen Ländern bevorzugt Kessel verwendet, bei denen das aus der Brennkammer strömende Gas über einen ersten Leerzug mit Abwärtsströmung in einen zweiten Leerzug mit Aufwärtsströmung und anschliessend in einen horizontalen Bündelzug (Konvektionsteil) strömt. Es sind auch Müllkessel bekannt, bei denen die Gase nach Durchströmen der Brennkammer direkt in den horizontalen Konvektionszug strömen. Neben diesen horizontalen Dackelkesseln sind auch vertikale Dampferzeuger für Müllverbrennungsanlagen bekannt, bei welchen der Konvektionsteil vertikal angeordnet ist und welche meist in 3- oder 4-Zugbauweise ausgeführt sind (K. J. Thermische Abfallbehandlung. EF Verlag für Energie- und Umwelttechnik GmbH, 1994, S. 390-402).

Bei diesen bekannten Müllkesseln sind im Konvektionsteil Verdampfer, Endüberhitzer, Überhitzer und Economiser in dieser Reihenfolge untergebracht. Diese Anordnung gilt besonders für die typischen Dampfparameter 40 bar, 400 °C. Der Überhitzer ist aus Korrosionsgründen relativ tiefen Gastemperaturen (< 650 °C) ausgesetzt und muss deshalb auch gross ausgelegt sein.

Bei diesen Kesseln tritt nachteilig an den Endüberhitzem bei Wandtemperaturen von über 350 °C Korrosion auf, weil die vom Abgas mitgeführten Verunreinigungen an den Rohren mit hoher Temperatur teigig sind und zu Verkrustungen und zu Verschmutzungen führen. Eine höhere Dampftemperatur als 400 °C wäre bezüglich Elektrizitätserzeugung wünschenswert, scheitert aber erst recht am Korrosionsproblem.

Um die Brennkammerwände von Müllverbrennungsanlagen vor korrosiven Gasen zu schützen, werden bekanntermassen Platten oder Stampfmassen, z. B. Siliciumcarbid, mit guter Wärmeleitfähigkeit auf die Wände der Brennkammer aufgebracht. Diese Platten werden z. T. auch mit einem Raum zwischen Platten und Rohrwand ausgeführt. Dieser Raum, der eine nicht korrosive Gasatmosphäre enthält, verhindert die Korrosion der Wandrohre durch Gase, die durch die Bestampfung durchdiffundieren können.

Bekannt sind weiterhin kohlegefeuerte Kraftwerkskessel mit Wandüberhitzer aus korrosionsbeständigem Stahl, die einerseits Wärme für den Überhitzer bei hohen Temperaturen aufnehmen, andererseits die gasdichte Kesselwand aus niedriglegiertem Stahl vor zu hohen Temperaturen schützen (W. Stiefel, M. Caravetti: "Design and Engineering of the 300-MW Lignite Boiler Plants Sostanj 4 and Yuan Bao Shan", Sulzer Technical Review (1978), Heft 2, S. 48-57).

Der Nachteil dieser konstruktiven Lösung besteht darin, dass hochlegierter und damit sehr teurer Stahl für die Wandüberhitzer verwendet werden muss.

Aus DE 496 575 ist eine Auskleidung für Brennkammern bekannt, bei der die Kammerwände an der Innenseite nach der Feuerung zu mit im Abstand angeordneten dünnwandigen, wärmedurchlässigen und wärmebeständigen Metallschirmen abgedeckt sind. Die mit Heizflächen bedeckten Brennkammerwände sollen auf diese Weise vor zu hohen Temperaturen geschützt werden. Die von den Metallschirmen aufgenommene Wärme wird durch kalte, hinter den Schirmen vorbeiströmende Gase, die mittels eines Ventilators eingeblasen werden, abgeführt.

In DE 458 032 wird ein als Wandüberhitzer ausgebildeter Überhitzer von der Strahlungswärme der Brennkammer beheizt, wobei zwischen dem Überhitzer und Brennkammer eine feste Wand aus Feuerfeststeinen angeordnet ist. Der Überhitzer ist von Zusatzluft umströmt und die Trennwand hat große Öffnungen für den Austritt der Zusatzluft. Ziel ist es, durch Kühlung der Überhitzerrohre eine Regelung der Überhitzertemperatur zu erreichen. Ein Korrosionsschutz ist nicht beabsichtigt und funktioniert indirekt nur, solange die Luft strömt.

### Darstellung der Erfindung

Die Erfindung versucht, die genannten Nachteile des Standes der Technik zu vermeiden. Ihr liegt die Aufgabe zugrund, einen Dampferzeuger für überhitzten Dampf für Verbrennungsanlagen mit korrosiven Rauchgasen zu schaffen, bei welchem eine hohe Überhitzertemperatur ohne Korrosion am Endüberhitzer erreicht werden kann, so dass der Überhitzer aus preiswertem Material gefertigt sein kann. Der Überhitzer soll pro Überhitzeroberfläche möglichst viel Wärme aufnehmen. Außerdem sollen auch bereits bestehende Kessel relativ problemlos umgebaut werden können.

Erfindungsgemäß wird dies bei einem Dampferzeuger gemäß Oberbegriff des Patentanspruchs 1 dadurch erreicht, dass die Platten aus einem nichtmetallischen anorganischen Material bestehen, dass die gasförmige Atmosphäre den Raum in möglichst geringer Menge durchströmt und dass der Druck im Raum um mindestens 0,2 mbar höher ist als in der Brennkammer.

Die Vorteile der Erfindung bestehen darin, dass im erfindungsgemäßen Dampferzeuger eine hohe Überhitzertemperatur einstellbar ist, wobei Korrosionseinflüsse weitgehend unterdrückt werden. Die notwendige Gesamtüberhitzerfläche verringert sich. Da wenigstens ein Teil des Überhitzers der Strahlung ausgesetzt ist, verbessert sich zudem das Teillastverhalten des Dampferzeugers. Wegen des höheren Druckes im Raum, in welchem der Wandüberhitzer angeordnet ist, und dem Fehlen von Öffnungen in den Platten bzw. dem Vorhandensein von nur kleinen Öffnungen (< 1% der Wandfläche) ist sichergestellt, dass kein Gas aus der Brennkammer in den Raum mit der nicht korrosiven Atmosphäre eindringen kann. Die Platten aus einem nichtmetallischen anorganischen Material vergrößern die Wärmemenge, die an die Überhitzerrohre übertragen wird.

Es ist vorteilhaft, wenn der Raum mit einem Gas, vorzugsweise mit Luft, welches vorgewärmt ist, in möglichst geringer Menge durchströmt wird, weil dadurch korrosive Gase, die durch die Platten diffundiert sind, weggespült werden. Andererseits findet keine unerwünschte Kühlung der Rohre statt.

Wenn die Platten an ihren den Rohren des Überhitzers zugewandten Seite Rippen aufweisen, welche die Rohre des Überhitzers zumindest teilweise umfassen, so wird auch hierdurch die Wärmemenge vergrößert, die an die Überhitzerrohre übertragbar ist.

Es ist besonders zweckmäßig, wenn die Wand des Strahlungsteiles eine Rohr-Steg-Rohr-Verbindung ist, welche als Verdampfer ausgebildet ist, da auf diese Weise die Gasdichtheit ohne Dehnungsprobleme gewährleistet ist.

Weiterhin ist von Vorteil, wenn nur der Endüberhitzer oder nur der heißeste Teil des Endüberhitzers als Wandüberhitzer in dem Raum mit nicht korrosiver Atmosphäre im Strahlungsteil angeordnet ist, weil bei diesen Teilen des Überhitzers auf Grund der hohen Temperaturen die geschilderten Korrosionsprobleme ohne Gegenmaßnahmen verstärkt auftreten würden. Durch die Verlegung des Endüberhitzers in den Strahlungsteil, beispielsweise die Brennkammer wird die Heizfläche im konvektiven Zug verkleinert, daher wird zusätzliche eine zusätzliche Verdampferheizfläche in den konvektiven Zug eingebaut. Diese zusätzlich einzubauende Verdampferheizfläche ist geringer als in dem Fall, in welchem, wie ebenfalls möglich, der gesamte Überhitzer als Wandüberhitzer in den Raum mit der nicht korrosiven Atmosphäre zwischen der Wand und den Platten angeordnet ist, um die den Rauchgasen entnommene Wärmemenge konstant zu halten.

Weiterhin ist es zweckmäßig, wenn der Wandüberhitzer an allen vier Wänden des Strahlungsteiles, beispielsweise der Brennkammer angeordnet ist, weil dann die Höhe des Wandüberhitzers minimal ist. Es ist aber auch von Vorteil, wenn der Wandüberhitzer nur an einem Teil der Wände des Strahlungsteiles angeordnet ist, weil diese konstruktive Lösung einfacher ist, da Dehnungsdifferenzprobleme in den Ecken umgangen werden können.

Ausserdem ist es vorteilhaft, wenn die Höhe des hinterlüfteten Raumes wesentlich grösser ist als die Höhe des Wandüberhitzers. Damit wird zusätzlich eine grössere Fläche der Verdampferwand geschützt.

Es ist zweckmässig, wenn der Wandüberhitzer aus einzelnen übereinander in einer Ebene angeordneten Rohren besteht, welche frei gegeneinander dehnbar sind, wobei Eintrittssammler und Austrittssammler senkrecht ausserhalb des Strahlungsteiles angeordnet sind, die Befestigung der Platten und die Befestigung der Überhitzerrohre durch ein gemeinsames Element sichergestellt wird und die Rohre des Wandüberhitzers aus niedriglegiertem Kesselbaustahl ausgeführt sind. Dies ist eine relativ einfache und kostengünstige Konstruktion.

Ein weiterer Vorteil wird durch die Anordnung einer Isolationsschicht zwischen der Wand des Strahlungsteiles und den Rohren des Wandüberhitzers erzielt, wobei auf der dem Wandüberhitzer zugewandten Seite die lsolationsschicht mit einer wärmereflektierenden Oberfläche versehen ist. Damit wird erreicht, dass möglichst wenig Wärme von den Überhitzerrohren an die Verdampferwand weiterfliesst.

Weitere vorteilhafte Ausgestaltungen der Erfindung sind in den Unteransprüchen enthalten.

### Kurze Beschreibung der Zeichnung

In der Zeichnung sind zwei Ausführungsbeispiele der Erfindung anhand eines Dampferzeugers mit zwei vertikalen Leerzügen und einem horizontalen konvektiven Bündelzug, welcher zur Müllverbrennung eingesetzt wird, dargestellt.

Es zeigen:
- Fig. 1: einen schematischen Teillängsschnitt des erfindungsgemässen Dampferzeugers;
- Fig. 2: ein vergrössertes Detail von Fig. 1 im Bereich des Wandüberhitzers in einer ersten Ausführungsform der Erfindung;
- Fig. 3: ein vergrössertes Detail von Fig. 1 im Bereich des Wandüberhitzers in einer zweiten Ausführungsform der Erfindung.

Es sind nur die für das Verständnis der Erfindung wesentlichen Elemente gezeigt. Die Strömungsrichtung der Medien ist mit Pfeilen bezeichnet.

### Weg zur Ausführung der Erfindung

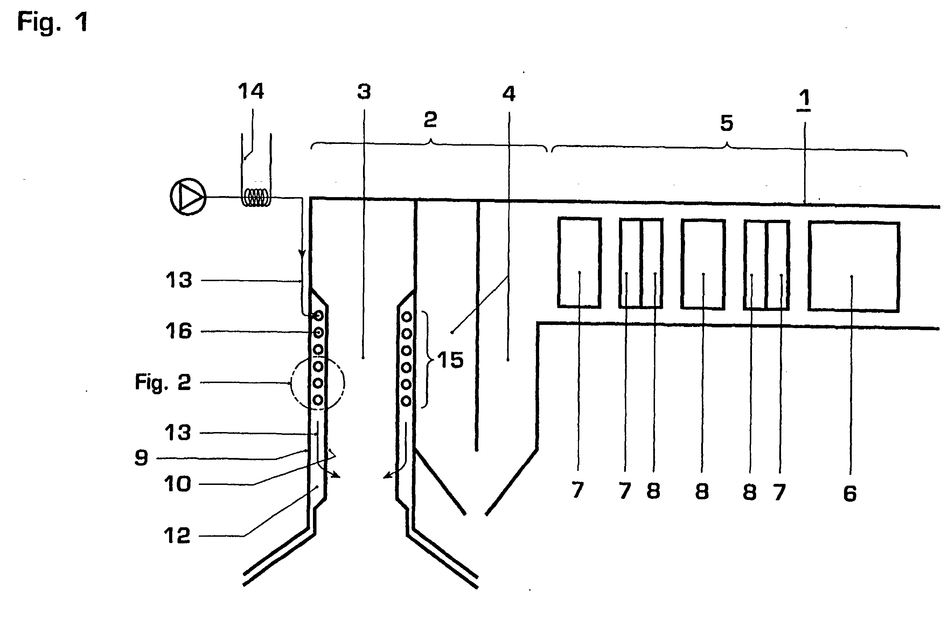

Nachfolgend wird die Erfindung anhand von Ausführungsbeispielen und der Fig. 1 bis 3 näher erläutert.

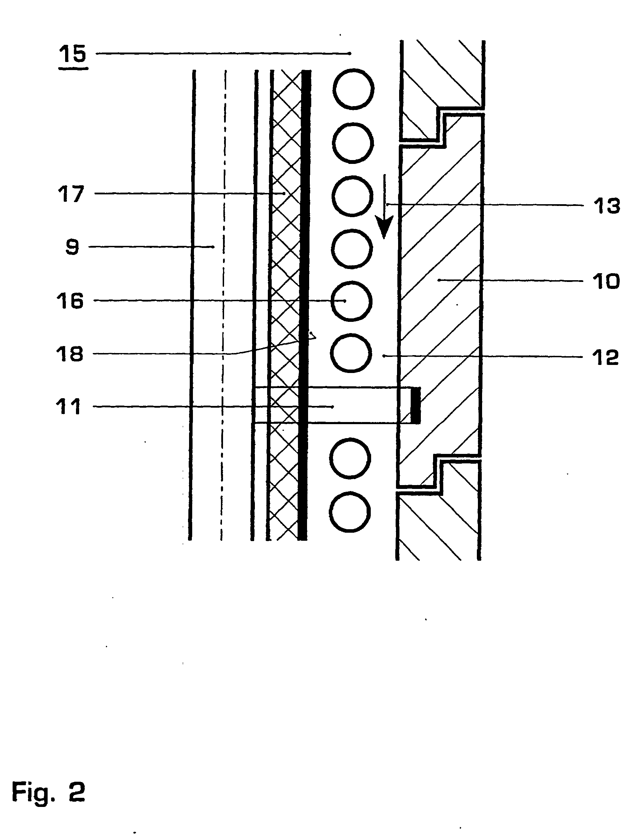

Fig. 1 zeigt einen schematischen Teillängsschnitt des erfindungsgemässen Dampferzeugers 1, der zur thermischen Behandlung von Müll eingesetzt wird. In Fig. 2 ist ein vergrössertes Detail von Fig. 1 dargestellt. Zum besseren Verständnis der Erfindung sind beide Figuren gleichzeitig heranzuziehen.

Der Dampferzeuger 1 ist ein Dackelkessel und besteht im wesentlichen aus einem Strahlungsteil 2 mit einer Brennkammer 3 und zwei vertikalen Leerzügen 4 und aus einem horizontalen Konvektionsteil 5, in welchem die Heizflächen für den Economiser 6, Verdampfer 7 und Überhitzer 8 angeordnet sind. Um die Brennkammerwand 9 vor korrosiven Gasen zu schützen, sind an der Brennkammerwand 9 innerhalb der Brennkammer 3 Platten 10 angeordnet, welche über Plattentragelemente 11 an der Wand 9 befestigt sind. Die Platten 10 bestehen aus keramischem Material. Die Brennkammerwand 9 ist als Rohr-Steg-Rohr-Verbindung ausgebildet und bildet eine gasdichte Hülle. Sie dient als Verdampfer.

Die Platten 10 sind nicht direkt auf der Wand 9 angebracht, so dass sich zwischen der Wand 9 und den Platten 10 ein Raum 12 erstreckt. Dieser Raum 12 weist eine nicht korrosive gasförmige Atmosphäre 13 auf, welche entweder nahezu ruht. Der Raum 12 kann auch mit Gas 13, in diesem Falle Luft, welche ausserhalb des Raumes 12 mittels einer Heizeinrichtung 14 vorgewärmt wird, von oben nach unten durchströmt sein, so wie es in Fig. 1 dargestellt ist. Dabei sollte aber möglichst wenig Luft 13 den Raum 12 durchströmen. Nach Durchströmen des Raumes 12 tritt die Luft 13 in die Brennkammer 3 aus. Im oberen Teil des Raumes 12 ist der Endüberhitzer des Dampferzeugers 1 als Wandüberhitzer 15 zwischen den Platten 10 und der Rohrwand 3 angeordnet. Die Wärmeübertragung an die Überhitzerrohre erfolgt zum grossen Teil durch Strahlung der heissen Platten 10.

Es ist von Interesse, wenn die Luftmenge, die durch den korrosionsfreien Raum fliesst, möglichst klein ist, da dann am wenigsten Wärme den Überhitzerrohren wieder entzogen wird. Aus diesem Grunde sollen die Austrittsöffnungen für das Gas 13 möglichst klein sein bzw. keine vorhanden sein. Auch ohne Austrittsöffnung für das Gas wird, bei Vorhandensein eines Überdruckes, immer noch Gas strömen, da die Platten nicht absolut dicht sind (Spalten, Risse, Poren usw.). Sind Austrittsöffnungen vorhanden, so sollen diese in die Brennkammer 3 münden.

Durch den höheren Gasdruck im Raum 12, der vorzugsweise um mindestens 0,2 mbar höher sein soll als in der Brennkammer 3, wird gewährleistet, dass keine korrosiven Rauchgase aus der Brennkammer 3 in den Raum 12 gelangen.

Der Wandüberhitzer 15 besteht aus einzelnen Rohren 16, die untereinander in einer Ebene angeordnet sind. Sie können sich frei gegeneinander dehnen. Der Wandüberhitzer 15 ist bei diesem Ausführungsbeispiel an allen 4 Brennkammerwänden 9 angeordnet. In anderen Ausführungsbeispielen kann er selbstverständlich auch nur an einem Teil der Wände 9 eingebaut sein. Der Endüberhitzer (Wandüberhitzer 15) befindet sich dampfseitig nach der letzten Einspritzung.

Durch die Verlegung des Endüberhitzers 15 in die Brennkammer 3 wird die Heizfläche in konvektiven Teil 5 des Dampferzeugers 1 verkleinert. Um die Gase trotzdem auf die gewünschte Endtemperatur abzukühlen, wird in den konvektiven Zug 5 zusätzliche Verdampferfläche eingebaut. Die Gesamtüberhitzerfläche des Dampferzeugers 1 wird aber kleiner, da ein Teil des Überhitzers, nämlich der Wandüberhitzer 15, der Strahlung ausgesetzt ist. Daher verbessert sich auch das Teillastverhalten des Kessels. Mindestens ein Teil des Überhitzers 8 ist aber im Konvektionsteil 5 des Dampferzeugers 1 angeordnet.

Die in Fig. 1 bzw. Fig. 2 nicht gezeigten Eintritts- und Austrittssammler sind senkrecht ausserhalb der Brennkammer 3 angeordnet, wobei der Eintrittssammler über dem Austrittssammler liegt, so dass eine gute Entleerbarkeit gegeben ist. Die Befestigung der Rohre 16 erfolgt gleichzeitig mit der Befestigung der vorgehängten Platten 10 durch die gemeinsamen Elemente 11.

Die Rohre 16 werden durch die Platten 10 vor Korrosion durch Rauchgase, die durch die Brennkammer 3 strömen, geschützt, da innerhalb des Raumes 12 keine korrosive Gasatmosphäre vorherrscht, sondern der Raum 12 und damit auch die Rohre 16 nur von vorgewärmter Luft umspült werden. Es findet somit keine rauchgasseitige Verschlackung der heissesten Überhitzerrohre 16 statt. Daher ist es problemlos möglich, die Rohre 16 des Wandüberhitzers 15 auch für den Einsatz bei hohen Dampfparametern aus normalem billigen Kesselbaustahl zu fertigen, was sich günstig auf die Gesamtkosten der Anlage auswirkt.

Um zu verhindern, dass möglichst wenig Wärme von den Überhitzerrohren 16 auf die Verdampferwand 9 fliesst, ist zwischen dem Wandüberhitzer 15 und der Kesselwand 9 eine Isolationsschicht 17 angeordnet. Diese Schicht 17 ist auf der dem Wandüberhitzer 15 zugewandten Seite mit einer wärmereflektierenden Oberfläche 18 versehen.

Mit der Erfindung ist es möglich, hohe Überhitzertemperaturen ohne Korrosion am Endüberhitzer zu erreichen.

Die erfindungsgemässe Lösung lässt sich nicht nur beim Neubau von Müllkesseln realisieren, sondem sie ist auch beim Umbau bestehender Kessel anwendbar. Ausserdem kann sie für die Klärschlammverbrennung oder Sondermüllverbrennung eingesetzt werden.

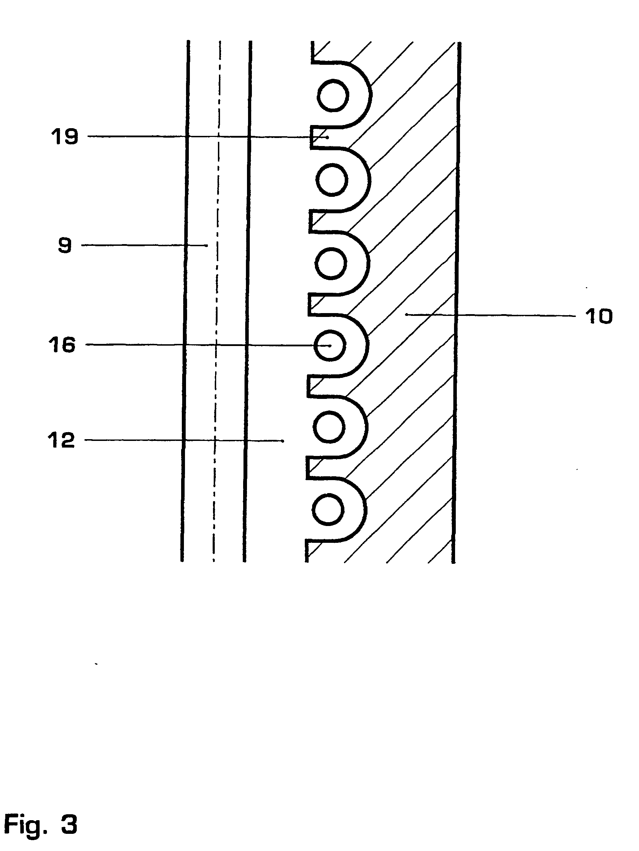

Fig. 3 zeigt ein vergrössertes Detail von Fig. 1 im Bereich des Wandüberhitzers in einer zweiten Ausführungsform der Erfindung. Diese Ausführung unterscheidet sich von dem bereits beschriebenen nur dadurch, dass die Platten 10 an ihren den Rohren des Überhitzers 8 zugewandten Seite Rippen 19 aufweisen, welche die Rohre des Überhitzers 8 zumindestens zum Teil umfassen. Das hat den Vorteil, dass auf Grund der grösseren Fläche die an die Überhitzerrohre übertragenen Wärmemenge vergrössert wird.

Selbstverständlich ist die Erfindung nicht auf das beschriebene Ausführungsbeispiel beschränkt. So ist es beispielsweise möglich, nicht nur den Endüberhitzer, sondern den gesamten Überhitzer als Wandüberhitzer 15 in den Raum 12 zwischen der Rohrwand 9 und den Platten 10 zu plazieren. Der Raum 12 kann mit Luft oder einem anderen Gas geringfügig durchströmt sein, oder er ist vorzugsweise nicht durchströmt.

Ausserdem ist es möglich, nicht den ganzen Endüberhitzer, sondern nur einen Teil, vorzugsweise den letzten heissesten Teil des Endüberhitzers, im Raum 12 anzuordnen.

Die Brennkammerauskleidung kann anstelle von Platten 10 auch aus Stampfmasse oder einem anderen, bei diesen Bedingungen korrosionsfesten Material bestehen.

Selbstverständlich kann der als Wandüberhitzer 15 ausgebildete Überhitzer 8 auch anstelle in der Brennkammer 3 in einem Leerzug 4 des Strahlungsteiles 2 angeordnet sein.

Der Dampferzeuger kann auch für andere Kesseltypen angewendet werden, wenn wegen der korrosiven Atmosphäre ein Schutz des Überhitzers notwendig ist.

### Bezugszeichenliste

- 1: Dampferzeuger
- 2: Strahlungsteil
- 3: Brennkammer
- 4: Leerzug
- 5: Konvektionsteil
- 6: Economiser
- 7: Verdampfer
- 8: Überhitzer
- 9: Wand von Pos. 2
- 10: Platte
- 11: Tragelemente für Pos. 10
- 12: Raum zwischen Pos. 9 und Pos. 10
- 13: Gas
- 14: Heizeinrichtung
- 15: Wandüberhitzer
- 16: Rohr von Pos. 15
- 17: Isolationsschicht
- 18: reflektierende Oberfläche

## Patentansprüche

1. Dampferzeuger (1) für überhitzten Dampf für Verbrennungsanlagen mit korrosiven Rauchgasen, im wesentlichen bestehend aus einem Strahlungsteil (2) mit mindestens einer Brennkammer (3) und einem Konvektionsteil (5) mit mindestens einem Überhitzer (8) und mit an mindestens an einer Wand (9) des Strahlungsteiles (2) innen angeordneten Platten (10), wobei zwischen den Platten (10) und der Wand (9) des Strahlungsteiles (2) ein Raum (12) vorgesehen ist, und mindestens ein Teil des Überhitzers (8) als Wandüberhitzer (15) in dem Raum (12) angeordnet ist, wobei der Raum (12) eine nicht-korrosive gasförmige Atmosphäre (13) enthält, welche einen höheren Druck als der Druck der Gase in der Brennkammer (3) aufweist, **dadurch gekennzeichnet, dass** die Platten (10) aus einem nichtmetallischen anorganischen Material bestehen, dass die gasförmige Atmosphäre (13) den Raum (12) in möglichst geringer Menge durchströmt und dass der Druck im Raum (12) um mindestens 0,2 mbar höher ist als in der Brennkammer (3).

2. Dampferzeuger nach Anspruch 1, **dadurch gekennzeichnet, dass** die gasförmige Atmosphäre (13) vorgewärmt ist.

3. Dampferzeuger nach Anspruch 1 oder 2, **dadurch gekennzeichnet, dass** die Platten (10) an ihrer den Rohren des Überhitzers (8) zugewandten Seite Rippen (19) aufweisen, welche die Rohre des Überhitzers (8) zumindestens teilweise umfassen.

4. Dampferzeuger nach einem der Ansprüche 1 bis 3, **dadurch gekennzeichnet, dass** der Konvektionsteil (5) einen Teil des Überhitzers (8) enthält.

5. Dampferzeuger nach einem der Ansprüche 1 bis 4, **dadurch gekennzeichnet, dass** die Wand (9) eine gasdichte Rohr-Steg-Rohr-Verbindung ist und als Verdampfer (3) ausgebildet ist.

6. Dampferzeuger nach einem der Ansprüche 1 bis 5, **dadurch gekennzeichnet, dass** nur der Endüberhitzer oder nur der heißeste Teil des Endüberhitzers als Wandüberhitzer (15) im Raum (12) im Strahlungsteil (2) angeordnet ist.

7. Dampferzeuger nach einem der Ansprüche 1 bis 6, **dadurch gekennzeichnet, dass** der Wandüberhitzer (15) an allen vier Wänden (9) des Strahlungsteiles (2) angeordnet ist.

8. Dampferzeuger nach einem der Ansprüche 1 bis 7, **dadurch gekennzeichnet, dass** die Höhe des Raumes wesentlich (12) großer ist als die Höhe des Wandüberhitzers (15).

9. Dampferzeuger nach einem der Ansprüche 1 bis 8, **dadurch gekennzeichnet, dass** der Wandüberhitzer (15) aus einzelnen übereinander in einer Ebene angeordneten Rohren (16) besteht, welche frei gegeneinander dehnbar sind, wobei Eintrittssammler und Austrittssammler senkrecht außerhalb des Strahlungsteiles (2) angeordnet sind.

10. Dampferzeuger nach Anspruch 9, **dadurch gekennzeichnet, dass** die Rohre (16) des Wandüberhitzers (15) aus niedriglegiertem Kesselbausstahl bestehen.

11. Dampferzeuger nach einem der Ansprüche 1 bis 11, **dadurch gekennzeichnet, dass** die Rohre (16) des Wandüberhitzers (15) und die innen an der Wand (9) angeordneten Platten (10) an einem gemeinsamen Plattentragelement (11) befestigt sind.

12. Dampferzeuger nach einem der Ansprüche 1 bis 11, **dadurch gekennzeichnet, dass** zwischen der Wand (9) und den Rohren (16) des Wandüberhitzers (15) eine Isolationsschicht (17) angeordnet ist, welche vorzugsweise mit einer wärmereflektierenden Oberfläche (18) auf der dem Wandüberhitzer (15) zugewandten Seite versehen ist.

13. Dampferzeuger nach einem der Ansprüche 1 bis 12, **dadurch gekennzeichnet, dass** der Dampferzeuger (1) verwendet wird in Anlagen zur Verbrennung von Müll, Sondermüll oder Klärschlamm.

## Claims

1. Steam generator (1) for superheated steam for incineration plants with corrosive flue gases, essentially comprising a radiation section (2), with at least one combustion chamber (3), and a convection section (5), having at least one supe rheater (8) and having plates (10) arranged on the inside of at least one wall (9) of the radiation section (2), a space (12) being provided between the plates (10) and the wall (9) of the radiation section (2), and at least part of the superheater (8) bei ng arranged as a wall superheater (15) in the space (12), the space (12) contain ing a noncorrosive gaseous atmosphere (13) which is at a higher pressure than the pressure of the gases in the combustion chamber (3) , **characterized in that** the plates (10) are made from a nonmetallic inorganic material, **in that** the gaseous atmosphere (13) flows through the space (12) to the minimum possible extent and **in that** the pressure in the space (12) is at least 0.2 mbar higher than in the combustion chamber (3).

2. Steam generator according to Claim 4, **characterized in that** the gaseous atmosphere (13) is preheated.

3. Steam generator according to Claims 1 and 2, **characterized in that** the plates (10) have ribs (19) on their side facing toward s the tubes of the superheate r (8), which ribs at least partially surround the tubes of the superheater (8).

4. Steam generator according to one of Claims 1 to 3, **characterized in that** the convection section (5) contains part of the superheater (8).

5. Steam generator according to one of Claims 1 to 4, **characterized in that** the wall (9) is a gastight tube-web-tube connection and is designed as an evaporator (3).

6. Steam generator according to one of Claims 1 to 5, **characterized in that** only the final superheater or only the hottest part of the final superheater is arranged as a wall superheater (15) in the space (12) in the radiation section (2).

7. Steam generator according to one of Claims 1 to 6, **characterized in that** the wall superheater (15) is arranged on all four walls (9) of the radiation section (2).

8. Steam generator according to one of Claims 1 to 7, **characterized in that** the height of the space (12) is significantly greater than the height of the wall superheater (15).

9. Steam generator according to one of Claims 1 t o 8, **characterized in that** the wall superheater (15) comprises individual tubes (16) which are arranged above one another in a single plane and can expand freely towards one another, inlet and outlet headers being arranged perpendicularly outside the radia tion section (2).

10. Steam generator according to Claim 9, **characterized in that** the tubes (16) of the wall superheater (15) are made from low-alloy boiler steel.

11. Steam generator according to one of Claims 1 to 10, **characterized in that** the tubes (1 6) of the wall superheater (15) and the plates (10) arranged on the inside of the wall (9) are attached to a common plate - support element (11).

12. Steam generator according to one of Claims 1 to 11, **characterized in that** an insulating layer (17) is arranged between the wall (9) and the tubes (16) of the wall superheater (15), which layer is preferably provided with a heat -reflecting surface (18) on the side facing towards the wall superheater (15).

13. Steam generator according to one of Claims 1 to 12, **characterized in that** the steam generator (1) is used in plants for the incineration of garbage, special garbage or clarification sludge.

## Revendications

1. Générateur de vapeur (1) pour produire de la vapeur surchauffée dans des installations de combustion dont les gaz de fumée sont corrosifs, essentiellement constitué d'une partie radiante (2) dotée d'au moins une chambre de combustion (3) et d'une partie de convection (5) dotée d'au moins un surchauffeur (8) et de plaques (10) disposées du côté intérieur sur au moins une paroi (9) de la partie radiante (2), un espace (12) étant prévu entre les plaques (10) et la paroi (9) de la partie radi ante (2) et au moins une partie du surchauffeur (8) qui sert de surchauffeur de paroi (15) étant disposée dans l'espace (12), l'espace (12) contenant une atmosphère gazeuse (13) non corrosive dont la pression est supérieure à la pression des gaz dans la ch ambre de combustion (3), **caractérisé en ce que** les plaques (10) sont constituées d'un matériau minéral non métallique, **en ce que** l'atmosphère gazeuse (13) traverse l'espace (12) au plus petit débit possible et **en ce que** la pression dans l'espace (12) est d'au moins 0,2 mbar supérieure à celle de la chambre de combustion (3).

2. Générateur de vapeur selon la revendication 1, **caractérisé en ce que** l'atmosphère gazeuse (13) est préchauffée.

3. Générateur de vapeur selon la revendication 1 ou 2, **caractérisé en ce que** sur leur côté tourné vers les tubes du surchauffeur (8), les plaques (10) présentent des nervures (19) qui entourent au moins en partie les tubes du surchauffeur (8).

4. Générateur de vapeur selon l'une des revendications 1 à 3, **caractérisé en ce que** la partie de convection (5) contient une partie du surchauffeur (8).

5. Générateur de vapeur selon l'une des revendications 1 à 4, **caractérisé en ce que** la paroi (9) est une liaison tube -nervure-tube étanche au gaz et est configurée comme évaporateur (3).

6. Générateur de vapeur selon l'une des revendications 1 à 5, **caractérisé en ce que** seul le surchauffeur final ou seule la partie la plus chaude du surchauffeur final est disposé(e) en tant que surchauffeur de paroi (15) dans l'espace (12) de la partie radiante (2).

7. Générateur de vapeur selon l'une des revendications 1 à 6, **caractérisé en ce que** le surchauffeur de paroi (15) est disposé sur les quatre parois (9) de la partie radiante (2).

8. Générateur de vapeur selon l'une des revendications 1 à 7, **caractérisé en ce que** la hauteur de l'espace (12) est essentiellement plus grande que la hauteur du surchauffeur de paroi (15).

9. Générateur de vapeur selon l'une des revendications 1 à 8, **caractérisé en ce que** le surchauffeur de paroi (15) est cons titué de tubes individuels (16) disposés dans un plan les uns au-dessus des autres et qui peuvent se dilater librement les uns par rapport aux autres, un collecteur d'entrée et un collecteur de sortie étant disposés verticalement à l'extérieur de la partie radiante (2).

10. Générateur de vapeur selon la revendication 9, **caractérisé en ce que** les tubes (16) du surchauffeur de paroi (15) sont constitués d'acier peu allié pour construction de chaudière.

11. Générateur de vapeur selon l'une des revendications 1 à 11, **caractérisé en ce que** les tubes (16) du surchauffeur de paroi (15) et les plaques (10) disposées à l'intérieur sur la paroi (9) sont fixés à un élément porte-plaques (11) commun.

12. Générateur de vapeur selon l'une des revendications 1 à 11, **caractérisé en ce qu'**entre la paroi (9) et les tubes (16) du surchauffeur de paroi (15) est disposée une couche d'isolation (17) qui, sur le côté tourné vers le surchauffeur de paroi (15), est de préférence dotée d'une surface (18) qui réfléchit la chaleur.

13. Générateur de vapeur selon l'une des revendications 1 à 12, **caractérisé en ce que** le générateur de vapeur (1) est utilisé dans des installations d'incinération d'ordures, de déchets spéciaux ou de boues de clarification.
